# EUROPEAN PATENT APPLICATION

(11) **EP 4 808 220 A1**
(43) Date of publication of application: **16.09.2026**
(21) Application number: 24896543.6
(22) Date of filing: 26.11.2024
(51) Int. Cl.: H04W 52/02

(54) **COMMUNICATION METHOD AND COMMUNICATION APPARATUS**

(30) Priority: 29.11.2023 CN 202311626727
(71) Applicant: Huawei Technologies Co., Ltd., Shenzhen, Guangdong 518129 (CN)
(72) Inventor: LIU, Heng, Shenzhen, Guangdong 518129 (CN); MA, Chuan, Shenzhen, Guangdong 518129 (CN); HAN, Feng, Shenzhen, Guangdong 518129 (CN)
(74) Representative: Pfenning, Meinig & Partner mbB
(86) International application number: PCT/CN2024/134689
(87) International publication number: WO 2025/113456

(57) **Abstract**

This application discloses a communication method and a communication apparatus. The method relates to the field of communication technologies. The method includes: A second network device sends a first request to a first network device, where the first request is used to request the first network device to predict or determine whether at least one cell can be switched off; the second network device receives first information from the first network device, where the first information indicates that at least one first cell can be switched off, and the first cell belongs to the at least one cell; and the second network device determines, based on the first information, whether to switch off the first cell. The method helps reduce energy consumption.

## Description

This application claims priority to Chinese Patent Application No. 202311626727.6, filed with the China National Intellectual Property Administration on November 29, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In an architecture in which a central unit (central unit, CU) and a distributed unit (distributed unit, DU) are split, the CU is configured to implement functions of a packet data convergence protocol (packet data convergence protocol, PDCP) layer and a protocol layer above the PDCP layer (for example, a radio resource control (Radio Resource Control, RRC) layer and/or a service data adaptation protocol (service data adaptation protocol, SDAP) layer). The DU is configured to implement functions of a protocol layer below the PDCP layer (for example, a radio link control protocol (radio link control, RLC) layer, a media access control protocol (media access control, MAC) layer, and a physical layer). There may be a plurality of DUs under one CU, a logical entity of one DU may serve a plurality of cells, and the DU may implement cell switch-off.

To satisfy the continuously growing traffic demand, wireless networks are being rapidly constructed. As a network scale expands, network energy consumption increases continuously. How to control cell switch-off to reduce energy consumption is a technical problem that needs to be urgently resolved.

### SUMMARY

Embodiments of this application provide a communication method and a communication apparatus, to help reduce energy consumption.

According to a first aspect, this application provides a communication method. The method includes: A second network device sends a first request to a first network device, where the first request is used to request the first network device to predict or determine whether at least one cell can be switched off; the second network device receives first information from the first network device, where the first information indicates that at least one first cell can be switched off, and the first cell belongs to the at least one cell; and the second network device determines, based on the first information, whether to switch off the first cell.

Based on the method described in the first aspect, the second network device requests the first network device to predict whether the cell can be switched off, and the first network device notifies the second network device of a prediction result via the first information after the prediction, to assist the second network device in switching off the cell, so as to reduce energy consumption.

In a possible implementation, the first information further indicates a switch-off time range corresponding to the at least one first cell.

In a possible implementation, the first request further includes resource status information of the at least one cell and/or energy consumption information of the at least one cell. The resource status information and the energy consumption information may be used by the first network device to predict whether the cell can be switched off, so that the prediction is more accurate.

In a possible implementation, the method further includes: sending second information to the first network device, where the second information includes resource status information of the at least one cell and/or energy consumption information of the at least one cell. The resource status information and the energy consumption information may be used by the first network device to predict whether the cell can be switched off, so that the prediction is more accurate.

In a possible implementation, before the second network device sends the second information to the first network device, the method further includes: The second network device receives a third request from the first network device, where the third request is used to request to report the energy consumption information of the cell.

In a possible implementation, before the switching off the first cell, the method further includes: sending a second request to the first network device, where the second request is used to request the first network device to hand over a terminal device in the first cell to another cell.

In a possible implementation, the method further includes: receiving first indication information from the first network device, where the first indication information indicates time and strength for enhancing coverage of a second cell, and/or the first indication information indicates time for the second cell to reserve a handover resource, the terminal device in the first cell is to be handed over to the second cell, and the second cell is a neighboring cell of the first cell. This implementation helps ensure signal quality after the terminal device is handed over from the first cell to the second cell, and prevents services of the terminal device from being affected.

In a possible implementation, after the switching off the first cell, the method further includes: sending second indication information to the first network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

According to a second aspect, this application provides a communication method. The method includes: A first network device receives a first request from a second network device, where the first request is used to request to predict or determine whether at least one cell can be switched off; the first network device performs state prediction on the at least one cell, to obtain first information, where the first information indicates that at least one first cell can be switched off; and the first network device sends the first information to the second network device.

For beneficial effects corresponding to the second aspect, refer to the descriptions of the first aspect. Details are not described herein again in this embodiment of this application.

In a possible implementation, the first information further indicates a switch-off time range corresponding to the at least one first cell.

In a possible implementation, a specific implementation in which the first network device performs prediction on the at least one cell, to obtain first information is: The first network device performs prediction on the at least one cell based on second information, to obtain the first information, where the second information includes one or more of the following: resource status information of the cell, energy consumption information of the cell, channel quality information of a terminal device in the cell, resource status information of a neighboring cell, or mobility information of the terminal device.

In a possible implementation, the first request further includes the resource status information of the at least one cell and/or the energy consumption information of the at least one cell.

In a possible implementation, the method further includes: The first network device receives the second information sent by the second network device, where the second information includes the resource status information of the at least one cell and/or the energy consumption information of the at least one cell.

In a possible implementation, before the first network device receives the second information sent by the second network device, the method further includes: The first network device sends a third request to the second network device, where the third request is used to request to report the energy consumption information of the cell.

In a possible implementation, the method further includes: The first network device receives a second request sent by the second network device, where the second request is used to request to hand over a terminal device in the first cell.

In a possible implementation, the method further includes: The first network device sends first indication information to the second network device, where the first indication information indicates time and strength for enhancing coverage of a second cell, and/or the indication information indicates time for the second cell to reserve a handover resource.

In a possible implementation, after the first network device sends the first information to the second network device, the method further includes: The first network device receives second indication information from the second network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

According to a third aspect, this application provides a communication method. The method includes: A second network device receives first indication information sent by a first network device, where the first indication information indicates a terminal device handover status corresponding to each of at least one cell; the second network device determines a first cell from the at least one cell based on the first indication information; and the second network device switches off the first cell.

Based on the method described in the third aspect, switching off the first cell by the second network device based on the first indication information reduces energy consumption, and can avoid significant impact on the terminal device after the second network device switches off the cell.

In a possible implementation, that the second network device determines the first cell from the at least one cell based on the first indication information specifically includes: The second network device determines, based on the first indication information, that all terminal devices in the first cell can perform cell handover.

In a possible implementation, the first indication information further includes a coverage area corresponding to each of the at least one cell, and a total coverage area corresponding to all cells in the at least one cell except the first cell includes a coverage area corresponding to the first cell. Based on this implementation, switching off the cell by the second network device reduces energy consumption and avoids cell coverage holes.

In a possible implementation, before the second network device receives the first indication information sent by the first network device, the method further includes: The second network device sends a first request to the first network device, where the first request is used to request to obtain the terminal device handover status corresponding to each of the at least one cell and/or the coverage area corresponding to each of the at least one cell.

In a possible implementation, the first cell meets a first condition, and the first condition includes one or more of the following: load is less than a first threshold; energy consumption is less than a second threshold; or current time is within a switch-off time range of the cell. Based on this implementation, switching off the first cell with low load and/or low energy consumption within the switch-off time range (for example, in the early morning with few users) helps reduce energy consumption and can avoid impact on a large number of terminal devices.

In a possible implementation, the method further includes: The second network device receives second indication information from the first network device, where the second indication information indicates the first condition.

In a possible implementation, before the second network device switches off the first cell, the method further includes: The second network device sends a second request to the first network device, where the second request indicates to request to hand over the terminal device in the first cell.

In a possible implementation, after the second network device switches off the first cell, the method further includes: The second network device sends third indication information to the first network device, where the third indication information indicates that the first cell is switched off.

In a possible implementation, the third indication information further includes one or more of the following: a cell identity of the first cell, an indication indicating that the first cell does not provide a service for a user, a sleep mode level of the first cell, or a cause value for switch-off of the first cell.

According to a fourth aspect, this application provides a communication method. The method includes: A first network device sends first indication information to a second network device, where the first indication information indicates a terminal device handover status corresponding to each of at least one cell.

For beneficial effects of the fourth aspect, refer to the beneficial effects of the third aspect. Details are not described herein again.

In a possible implementation, the first indication information further includes a coverage area corresponding to each of the at least one cell.

In a possible implementation, before the first network device sends the first indication information to the second network device, the method further includes: The first network device receives a first request from the second network device, where the first request is used to request to obtain the terminal device handover status corresponding to each of the at least one cell and/or the coverage area corresponding to each of the at least one cell.

In a possible implementation, the method further includes: The first network device sends second indication information to the second network device, where the second indication information indicates a first condition, and the first condition includes one or more of the following: cell load is less than a first threshold; cell energy consumption is less than a second threshold; or current time is within a switch-off time range of the cell.

In a possible implementation, the method further includes: The first network device receives a second request from the second network device, where the second request indicates to request to hand over a terminal device in a first cell.

In a possible implementation, the method further includes: The first network device receives third indication information from the second network device, where the third indication information indicates that the first cell is switched off.

In a possible implementation, the third indication information further includes one or more of the following: a cell identity of the first cell, an indication indicating that the first cell does not provide a service for a user, a sleep mode level of the first cell, or a cause value for switch-off of the first cell.

According to a fifth aspect, this application provides a communication method. The method includes: A second network device sends first information to a first network device, where the first information includes energy consumption information of at least one cell. The second network device receives first indication information from the first network device, where the first indication information indicates the second network device to switch off a first cell; and switches off the first cell.

Based on the method described in the fifth aspect, the first network device determines, based on the energy consumption information, whether to switch off the cell, and assists, by sending the first indication information, the second network device in switching off the cell. This helps reduce energy consumption.

In a possible implementation, the energy consumption information includes one or more of the following: node energy consumption, cell energy consumption, terminal energy consumption, data radio bearer DRB energy consumption, or slice energy consumption.

In a possible implementation, before the second network device sends the first information to the first network device, the method further includes: The second network device receives a first request from the first network device, where the first request is used to request the energy consumption information of the at least one cell. Based on this implementation, the first network device can actively trigger a decision on whether the second network device needs to switch off the cell.

In a possible implementation, after the second network device switches off the first cell, the method further includes: The second network device sends second indication information to the first network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

According to a sixth aspect, this application provides a communication method. The method includes: A first network device receives first information from a second network device, where the first information includes energy consumption information of at least one cell; the first network device determines a first cell from the at least one cell based on the first information; and the first network device sends first indication information to the second network device, where the first indication information indicates the second network device to switch off the first cell.

For the sixth aspect and beneficial effects of the sixth aspect, refer to the descriptions of the fifth aspect. Details are not described herein again.

In a possible implementation, the energy consumption information includes one or more of the following: node energy consumption, cell energy consumption, terminal energy consumption, data radio bearer DRB energy consumption, or slice energy consumption.

In a possible implementation, before the first network device receives the first information from the second network device, the method further includes: The first network device sends a first request to the second network device, where the first request is used to request the energy consumption information of the at least one cell.

In a possible implementation, after the first network device sends the first indication information to the second network device, the method further includes: receiving second indication information from the second network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

In a possible implementation, the method further includes: sending the energy consumption information of the at least one cell to a core network device.

According to a seventh aspect, this application provides a communication apparatus. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the function. The unit or the module may be software and/or hardware. For operations performed by the communication apparatus and beneficial effects thereof, refer to the method according to the first aspect, the third aspect, or the fifth aspect and the beneficial effects thereof. Repeated parts are not described again.

According to an eighth aspect, this application provides a communication apparatus. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the function. The unit or the module may be software and/or hardware. For operations performed by the communication apparatus and beneficial effects thereof, refer to the method according to the second aspect, the fourth aspect, or the sixth aspect and the beneficial effects thereof. Repeated parts are not described again.

According to a ninth aspect, this application provides a communication apparatus. The communication apparatus includes a processor. When the processor invokes a computer program in a memory, the method according to any one of the first aspect to the sixth aspect and the possible implementations of the method are performed.

In a possible implementation, the communication apparatus further includes the memory. The memory and the processor are coupled to each other. Optionally, the memory and the processor are integrated together.

In a possible implementation, the communication apparatus further includes a transceiver. The transceiver is configured to send or receive data and/or signaling.

According to a tenth aspect, this application provides a communication apparatus. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the first aspect to the sixth aspect and the possible implementations of the method by using a logic circuit or by executing code instructions.

According to an eleventh aspect, this application provides a computer-readable storage medium. The storage medium stores a computer program or instructions, and when the computer program or the instructions are executed by a communication apparatus, the method according to the first aspect or the second aspect and the possible implementations thereof are implemented.

According to a twelfth aspect, an embodiment of this application provides a computer program or a computer program product, including code or instructions. When the code or the instructions are run on a computer, the computer is caused to perform the method according to any one of the first aspect to the sixth aspect and the possible implementations thereof.

According to a thirteenth aspect, an embodiment of this application provides a communication system. The communication system includes the communication apparatus configured to perform the method according to the seventh aspect and the communication apparatus configured to perform the method according to the eighth aspect.

According to a fourteenth aspect, this application provides a chip. The chip includes a processor and a communication interface. The processor is configured to cause the chip to perform the method according to any one of the first aspect, the third aspect, the fifth aspect, or the possible implementations of the first aspect, the third aspect, or the fifth aspect, or the processor is configured to cause the chip to perform the method according to any one of the second aspect, the fourth aspect, the sixth aspect, or the possible implementations of the second aspect, the fourth aspect, or the sixth aspect.

### BRIEF DESCRIPTION OF DRAWINGS

FIG. 1 is a diagram of a communication system according to an embodiment of this application;
FIG. 2 is a diagram of a CU and a DU according to an embodiment of this application;
FIG. 3 is a schematic flowchart of a communication method according to an embodiment of this application;
FIG. 4 is a schematic flowchart of another communication method according to an embodiment of this application;
FIG. 5 is a diagram of a cell coverage area according to an embodiment of this application;
FIG. 6 is a schematic flowchart of another communication method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of a chip according to an embodiment of this application.

### DESCRIPTION OF EMBODIMENTS

The following further describes specific embodiments of this application in detail with reference to accompanying drawings.

Terms "first", "second", and the like in the specification, claims, and accompanying drawings of this application are used to distinguish between different objects, and are not used to describe a specific sequence. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following describes a system architecture in embodiments of this application.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions in embodiments of this application may be applied to various communication systems such as a satellite communication system and a conventional mobile communication system. The satellite communication system may be integrated with the conventional mobile communication system (that is, a terrestrial communication system). The communication systems are, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, and another future communication system like a 6th generation (6th generation, 6G) system. The technical solutions in embodiments of this application further support a communication system that integrates a plurality of wireless technologies, for example, may be further applied to a system that integrates a terrestrial mobile communication network and a non-terrestrial network (non-terrestrial network, NTN) like an uncrewed aerial vehicle, a satellite communication system, or a high altitude platform station (high altitude platform station, HAPS) communication system.

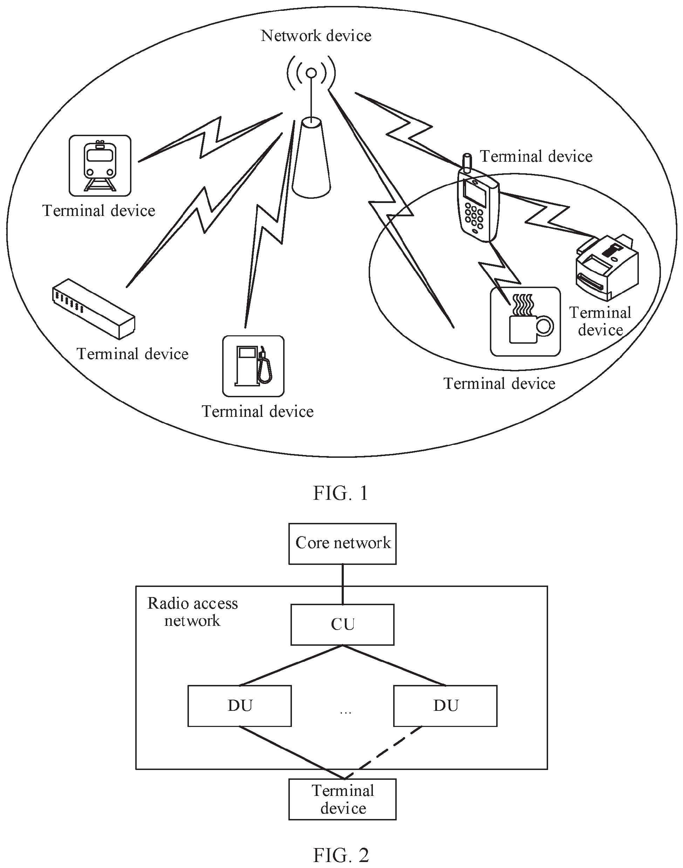

FIG. 1 shows an example of a communication system applicable to an embodiment of this application. The communication system includes at least one network device and at least one terminal device. In FIG. 1, one network device and a plurality of terminal devices are used as examples. The plurality of terminal devices may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in a wireless communication system. All of the terminal devices may be connected to the network device. All the plurality of terminal devices can communicate with the network device. In addition, the terminal devices may also communicate with each other. Certainly, a number of terminal devices and a number of network devices in FIG. 1 are merely examples, and there may alternatively be more or fewer terminal devices and more or fewer network devices.

The terminal device in embodiments of this application may also be referred to as a terminal for short, and is an entity configured to receive or transmit a signal on a user side. The terminal device may be a device that provides voice and/or data connectivity for a user, for example, a handheld device or a vehicle-mounted device with a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), a UE, or the like. The terminal device may be a mobile terminal, for example, a mobile phone (or referred to as a "cellular" phone), and a computer that has a mobile terminal. For example, the terminal device may be a portable, pocket-sized, handheld, computer built-in, or vehicle-mounted mobile apparatus, which exchanges voice and/or data with the radio access network. For example, the terminal device may alternatively be a device like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), and a wearable device like a smartwatch, a smart band, or a pedometer. However, embodiments of this application are not limited thereto.

A device form of the terminal device is not limited in embodiments of this application. An apparatus configured to implement a function of the terminal device may be a terminal device, or may be an apparatus, for example, a chip system, that can support the terminal device in implementing the function. The apparatus may be installed in the terminal device or used in conjunction with the terminal device. In embodiments of this application, the chip system may include a chip, or may include a chip and another discrete component.

The network device is an entity that is on a network side and that is configured to send a signal, receive a signal, or send a signal and receive a signal. The network device may be an apparatus deployed in a radio access network (radio access network, RAN) to provide a wireless communication function for the terminal. The network device may communicate and interact with a core network device, to provide a communication service for the terminal device.

In a possible scenario, the network device may be a device having a function of a base station, for example, an evolved NodeB (evolved NodeB, eNodeB), a transmission reception point (transmission reception point, TRP), a transmission point (transmission point, TP), a next generation NodeB (next generation NodeB, gNB), a next generation base station in a 6G mobile communication system, an integrated access and backhaul (integrated access and backhaul, IAB) node, or a non-terrestrial network device, that is, a device or a satellite that may be deployed on a high altitude platform. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a remote radio unit (remote radio unit, RRU) in a distributed base station scenario, a transmission reception point (transmission reception point, TRP), a transmission point (transmission point, TP), a mobile switching center, or the like, or may be an antenna panel of a base station. The control node may be connected to a plurality of base stations, and configure resources for a plurality of terminals covered by the plurality of base stations. A device with a base station function may have different names in systems using different radio access technologies. For example, the device may be a gNB in 5G, a network side device in a network after 5G, a network device in a future evolved public land mobile (communication) network (public land mobile network, PLMN), or a device that has a base station function in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

Network devices in the radio access network may include a central unit (central unit, CU) and a distributed unit (distributed unit, DU). As shown in FIG. 2, a plurality of DUs may be centrally controlled by one CU. The CU and the DU may be separately disposed, that is, a CU-DU split architecture is used. In the CU-DU split architecture, the CU has some functions of a core network, and the CU and the DU may be configured based on protocol layer functions of a wireless network implemented by the CU and the DU. For example, the CU is configured to implement functions of a packet data convergence protocol (packet data convergence protocol, PDCP) layer and a protocol layer above the PDCP layer, for example, implement functions of a radio resource control (Radio Resource Control, RRC) layer and/or a service data adaptation protocol (service data adaptation protocol, SDAP) layer. The DU is configured to implement functions of a protocol layer below the PDCP layer, for example, implement functions of a radio link control protocol (radio link control, RLC) layer, a media access control protocol (media access control, MAC) layer, and a physical layer.

The CU may further include a CU-control plane (control plane, CP) and a CU-user plane (user plane, UP). The CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer.

In different systems, the CU, or the DU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU and the DU are used as examples for description in this application. Either the CU (or the CU-CP or the CU-UP) or the DU in this application may be implemented by a software module, a hardware module, or a combination of a software module and a hardware module.

A form of the network device is not limited in embodiments of this application. An apparatus configured to implement a function of the network device may be the network device, or may be an apparatus, for example, a chip system, that can support the network device in implementing the function. The apparatus may be installed in the network device or used in conjunction with the network device.

With reference to the foregoing descriptions of the CU-DU split architecture, there may be a plurality of DUs under one CU, a logical entity of one DU may serve a plurality of cells, and the DU may implement cell switch-off. To satisfy the growing demand of people for traffic, wireless networks are being rapidly constructed. As a network scale increases, network energy consumption increases continuously. How to control cell switch-off to reduce energy consumption is a technical problem that needs to be urgently resolved.

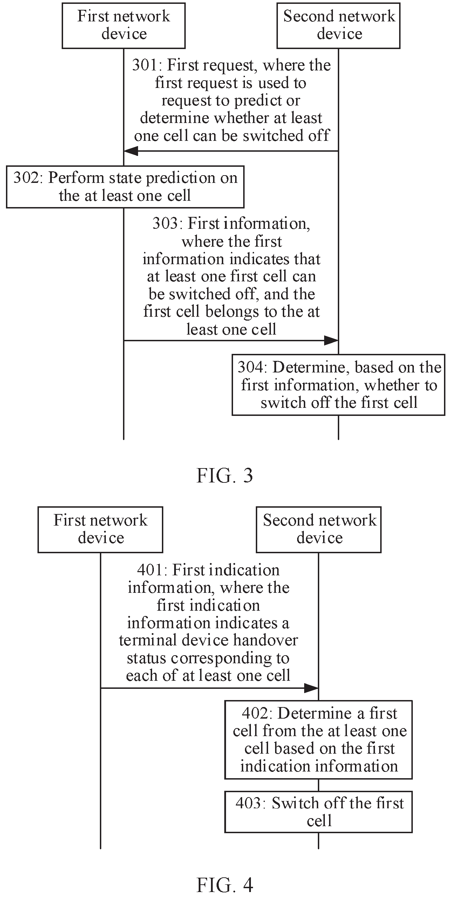

To reduce energy consumption, an embodiment of this application provides a communication method. As shown in FIG. 3, the communication method includes step 301 to step 304. The method shown in FIG. 3 is executed by a second network device and a first network device, or the method shown in FIG. 3 may be executed by a chip in the second network device and the first network device. FIG. 3 is described by using the second network device and the first network device as an example. An execution body of the communication method is not limited in this embodiment of this application. The second network device and the first network device may be network devices correspondingly described in the communication system shown in FIG. 1. Details are as follows.

301: The second network device sends a first request to the first network device, and correspondingly, the first network device receives the first request from the second network device, where the first request is used to request to predict or determine whether at least one cell can be switched off.

In this embodiment of this application, one or more second network devices may be centrally managed by one first network device. Optionally, the first network device may be a CU, the second network device may be a DU, and the CU and the DU may be in a split architecture. Cell switch-off may mean that a cell enters a sleep state, and the cell in the sleep state no longer provides a service for a terminal device, or the cell in the sleep state is in a power-off (non-active) state. The sleep state may also be referred to as a sleep mode. The at least one cell for which prediction is requested via the first request is some or all of cells served by the second network device. Optionally, the second network device may periodically send the first request to the first network device, or send the first request to the first network device at preset time, or the second network device may send the first request to the first network device when some conditions are met, where for example, the condition may be that energy consumption of a cell served by the second network device is less than an energy consumption threshold. An occasion on which the second network device sends the first request to the first network device is not limited in this embodiment of this application.

In a possible implementation, the first request further includes resource status information of the at least one cell and/or energy consumption information of the at least one cell. Alternatively, in another possible implementation, the second network device sends second information to the first network device, where the second information includes resource status information of the at least one cell and/or energy consumption information of the at least one cell. Optionally, the second information is carried in a resource status information message. The resource status information and the energy consumption information may be used by the first network device to predict whether the cell can be switched off.

Optionally, before the second network device sends the energy consumption information of the cell via the first request or the second information, the method further includes: The first network device sends a third request to the second network device, and correspondingly, the second network device receives the third request from the first network device, where the third request is used to request the second network device to report the energy consumption information of the cell. Further, optionally, the third request includes but is not limited to one or more of the following: a cell identity, an indication of requesting the energy consumption information, and a cause value for requesting to report the energy consumption information. The cause value may be specifically network energy saving, energy efficiency as a service, another cause value related to energy consumption or energy efficiency, or the like.

Optionally, the resource status information includes but is not limited to one or more of the following: a number of active users per cell (per cell); a number of RRC connections; per (per) slice (slice) physical resource block usage, capacity, and user performance (including a throughput, a packet delay, a number of lost packets of each user and/or all users, and the like); a number of protocol data unit (protocol data unit, PDU) sessions per slice, a number of active users per slice, and a number of RRC connections per slice; a terminal device slice maximum bit rate per slice (which may be specifically a maximum bit rate of each terminal device and/or all terminal devices or a number of users at each maximum bit rate); capacity and physical resource block usage of each session; and a terminal device slice maximum bit rate and performance of the terminal device.

Optionally, the energy consumption information may include but is not limited to one or more of the following: energy consumption of the second network device (the DU) (node-level energy consumption), a cell identity, cell-level energy consumption, a terminal device identifier, terminal device-level energy consumption, a data radio bearer (data radio bearer, DRB) identity, DRB-level energy consumption, a slice identifier, or slice-level energy consumption, or energy consumption information of another level, for example, PDU session-level energy consumption and quality of service (quality of service, QoS) flow (flow)-level energy consumption. This is not limited herein. A relationship between a PDU session and a QoS flow is as follows: One slice may include a plurality of PDU sessions, one PDU session may include a plurality of QoS flows, and the QoS flows are mapped to a DRB. It may be understood that after an energy consumption value of either the PDU session-level energy consumption or the QoS flow-level energy consumption is determined, an energy consumption value of the other may be obtained based on the foregoing relationship.

The energy consumption described above may be energy efficiency, or a relative value, or may be an absolute energy consumption value.

For a calculation manner of the energy efficiency, refer to the following formula (1), with a unit of bit/Joule. $Energy efficiency = \frac{Transmit data throughput}{Total transmit energy consumption}$

The relative value is a relative value determined according to a criterion for transmitting some signals, for example, may be a value from 0 to 100. A larger value indicates greater transmit energy consumption, and a smaller value indicates smaller transmit energy consumption. If the value is 100, it indicates maximum transmit energy consumption. The absolute value may be actual energy consumed for transmitting data, with a unit of Joule.

The following explains the cell-level energy consumption, the terminal device-level energy consumption, the DRB-level energy consumption, and the slice-level energy consumption described above.

Cell-level energy consumption is energy consumption for data transmission in a cell, or is a sum of energy consumption for data transmission in a cell and energy consumption of common signals of the cell. It may be understood that when the cell provides a service for a terminal device, in addition to energy consumption of a data transmission service, there is also energy consumption of common signals and the like.

Terminal device-level energy consumption is energy consumption of an independent terminal device, for example, may be energy consumption for data transmission of each terminal device, or may be energy consumption for data transmission of each terminal device plus average energy consumption of common signals. The energy consumption for data transmission is equal to a proportion of physical resource module (Physical Resource Block, PRB) usage to total PRB usage, multiplied by energy consumption of the total PRB usage. It may be understood that when a cell provides a service for a terminal device, in addition to energy consumption of a data transmission service, there is also energy consumption of common signals and the like. Average energy consumption of common signals is energy consumption of common signals of a network device averaged over each terminal device. For a specific calculation manner, refer to the formula (2). $\begin{matrix}Average energy consumption of common signals = \\ \frac{Energy consumption of common signals of a network device}{Number of terminal devices}\end{matrix}$

DRB-level energy consumption is energy consumption of transmission on a DRB. A DRB is a data bearer, and a transmitted QoS flow is mapped to the DRB. One or more QoS flows may be mapped to one DRB. Energy consumption of a terminal device may be obtained based on a correspondence between DRB energy consumption and QoS flows of different terminal devices.

Slice-level energy consumption is energy consumption on a slice, and is related to PRB usage of the slice. Data of a plurality of terminal devices may be simultaneously transmitted on one slice, and energy consumption of the terminal devices may be determined according to a pairing principle (for example, average allocation, services of the terminal devices, or a proportion of a data transmission rate to an overall capability of the slice). The energy consumption of the terminal devices may be obtained based on a correspondence between slice energy consumption and the served terminal devices.

302: The first network device performs state prediction on the at least one cell.

In this embodiment of this application, state prediction may also be understood as inference. Optionally, that the first network device performs state prediction on the cell means that the first network device determines, based on existing parameter information of the cell, whether the cell can be switched off in a time period. Further, optionally, predicting whether the cell can be switched off in a time period may also be understood as predicting whether the cell is in a specific state in a time period, where the state includes but is not limited to features such as low energy consumption and few accessed terminal devices. Therefore, no significant impact is caused after the cell is switched off.

Optionally, when the first request carries the energy consumption information, a specific implementation of step 302 may alternatively be that the first network device predicts an energy consumption value of the second network device or each cell served by the second network device or each terminal device, that is, predicts an energy consumption value of the second network device or each cell of the second network device or each terminal device in a time period based on the energy consumption information. After obtaining a prediction result, the prediction result is sent to the second network device, and the second network device may make a decision on cell switch-off based on the prediction result. Optionally, the prediction result may include but is not limited to the following predicted by the first network device in the time period: an energy consumption value of the second network device, an energy consumption value of each cell served by the second network device, or an energy consumption value of each terminal device.

Optionally, a specific implementation of performing state prediction may be performing prediction by using an artificial intelligence (Artificial Intelligence, AI) model, and inputting the existing parameter information of the at least one cell into the AI model, to obtain a result of whether each of the at least one cell can be switched off. The AI model may be included in the first network device, and the first network device performs state prediction by using the AI model. Alternatively, the AI model may not be located in the first network device, and the state prediction may be performed by a network management system, an upper-layer AI processing module, or another module. This is not limited in this embodiment of this application. In this case, the first network device may exchange information with the module for prediction through an interface.

In a possible implementation, the first network device may perform state prediction on the at least one cell based on the second information. The second information includes but is not limited to one or more of the following: resource status information of the cell, energy consumption information of the cell, channel quality information of a terminal device in the cell, resource status information of a neighboring cell, mobility information of the terminal device, or other information related to a cell status and the terminal device. For obtaining, by the first network device, the resource status information of the cell and the energy consumption information of the cell, refer to the descriptions of step 301. Details are not described herein again. Optionally, after obtaining the energy consumption information of the cell, the first network device may further send the energy consumption information of the cell to a core network device and/or the network management system, where the energy consumption information may be used for data analysis of the core network and/or data analysis of the network management system.

The channel quality information of the terminal device in the cell is a result of measuring signal quality of the cell by the terminal device, and includes signal quality of a current serving cell, or may include a result of measuring a signal of a neighboring cell.

The resource status information of the neighboring cell is resource status information of a neighboring cell of the cell, and a type of the resource status information of the neighboring cell is consistent with that of the current cell.

The mobility information of the terminal device is a record of mobility information of the terminal device in the cell, and includes historical mobility information and predicted future mobility information.

The channel quality information of the terminal device in the cell, the resource status information of the neighboring cell, and the mobility information of the terminal device are known information of the first network device, and are information reported by the terminal device to the first network device, or are notified by the neighboring cell to the first network device through interaction, or are obtained by the first network device through prediction. How the first network device obtains the channel quality information of the terminal device in the cell, the resource status information of the neighboring cell, and the mobility information of the terminal device is not limited in this embodiment of this application. An implementation of performing state prediction by using the AI model is: inputting second information of each of the at least one cell into the AI model, to obtain first information output by the AI model.

It should be further noted that the second information and the cell described herein are in one-to-one correspondence. That the first network device performs state prediction on the at least one cell specifically means that the first network device performs state prediction on each of the at least one cell based on the second information of each of the at least one cell. For example, it is assumed that the at least one cell includes a cell 1 and a cell 2. A process in which the first network device performs state prediction on the at least one cell is as follows: The first network device performs state prediction on the cell 1 based on second information of the cell 1, and the first network device performs state prediction on the cell 2 based on second information of the cell 2.

303: The first network device sends the first information to the second network device, and correspondingly, the second network device receives the first information from the first network device, where the first information indicates that at least one first cell can be switched off, and the first cell belongs to the at least one cell.

304: The second network device determines, based on the first information, whether to switch off the first cell.

In this embodiment of this application, the first network device notifies the second network device of the prediction result via the first information. For example, the first information may include a list of cells that can be switched off, and the list of cells that can be switched off includes an identity of each of the at least one first cell. The second network device may determine, based on the first information, whether to switch off the first cell. For example, the second network device may determine to switch off some or all of the at least one first cell indicated by the first information, or the second network device may determine not to switch off the first cell. Optionally, the second network device may determine, based on the first information, that the first cell needs to be switched off, or the second network device may further determine, based on the first information and other cell parameter information, for example, a coverage area of the first cell, whether to switch off the first cell. This is not limited in this embodiment of this application. Based on the method described in this embodiment of this application, the first network device predicts whether the cell can be switched off, and notifies the second network device of the prediction result via the first information, to assist the second network device in switching off the cell, so as to reduce energy consumption.

Optionally, with reference to the foregoing descriptions, the first network device may alternatively perform prediction on the energy consumption value of the second network device, each cell of the second network device, or the terminal device, to obtain the prediction result. Corresponding to step 303, the prediction result may be carried in the first information. That the second network device determines, based on the first information, whether to switch off the first cell may be understood as that the second network device makes a decision on cell switch-off based on the prediction result.

In a possible implementation, the first information further indicates a switch-off time range corresponding to the at least one first cell. After the second network device determines that the first cell needs to be switched off, the second network device switches off the first cell within the switch-off time range corresponding to the first cell. Correspondingly, when end time of the switch-off time range arrives, the second network device may switch on the first cell.

It should be further noted that the first information may not need to indicate the switch-off time range. For example, the first information indicates that the at least one cell can be switched off now. For another example, when the second network device sends the first request, the first request further carries a switch-off time range corresponding to each of the at least one cell, to be specific, the second network device requests the first network device to predict whether each of the at least one cell can be switched off within the corresponding switch-off time range. After the second network device receives the first information, the first information indicates that the at least one first cell can be switched off within the switch-off time range corresponding to the at least one first cell.

In a possible implementation, after the second network device switches off the first cell, the second network device sends second indication information to the first network device, where the second indication information indicates that the first cell is switched off, that is, the second indication information indicates that the first cell is in a sleep state and no longer provides a service for the terminal device. Based on this implementation, the first network device can learn of a switch-off status of the cell. Optionally, after receiving the second indication information, the first network device may send coverage adjustment auxiliary information to another second network device, where the coverage adjustment auxiliary information includes an affected cell or synchronization signal block (synchronization signal/physical broadcast channel block, SSB) information and other coverage-related information, to help the another second network device adjust a cell coverage area of the second network device. Content of the second indication information may include at least one of the following: a cell identity of the first cell, an indication indicating that the first cell does not provide a service for a user, an indication indicating that the first cell is in a sleep mode of different levels such as a power-off state, or a cause value for switch-off of the first cell, where the cause value may be network energy saving or another cause value related to energy saving.

Optionally, after the first network device determines that all cells served by a second network device connected to a gNB-CU-UP are switched off, that is, all the cells served by the second network device connected to the gNB-CU-UP enter a sleep state and no user plane scheduling is performed through the gNB-CU-UP, the first network device may switch off the gNB-CU-UP corresponding to the second network device.

In a possible implementation, before the second network device switches off the first cell, the method further includes: The second network device sends a second request to the first network device, and correspondingly, the first network device receives the second request from the second network device, where the second request is used to request the first network device to hand over a terminal device in the first cell to another cell. After the first network device receives the second request, the first network device initiates cell handover of the terminal device. Optionally, after all terminal devices in the first cell complete cell handover, for example, after the first network device releases context information of all the terminal devices in the first cell, the first network device sends response information for the second request to the second network device, where the response information indicates, to the second network device, that all the terminal devices in the first cell have completed cell handover, and the first cell can be switched off. Optionally, the second request includes but is not limited to one or more of the following information: an identity of the first cell, a handover request indication, or a handover request cause value. If there is no terminal device in the first cell, the second network device may not need to send the second request.

A cell to which the terminal device is handed over is referred to as a second cell. The second cell and the first cell may belong to a same second network device, or the second cell and the first cell may belong to different second network devices. For ease of differentiation, the second network device to which the first cell described in this embodiment of this application belongs is referred to as a third network device, a fourth network device is a second network device different from the third network device, and both the third network device and the fourth network device are managed by a same first network device.

Optionally, the first network device sends first indication information to the third network device or the fourth network device, and correspondingly, the third network device or the fourth network device receives the first indication information from the first network device. The first indication information indicates time and strength for enhancing coverage of the second cell, and/or the indication information indicates time for the second cell to reserve a handover resource, the terminal device in the first cell is to be handed over to the second cell, and the second cell is a neighboring cell of the first cell.

It may be understood that when the second cell belongs to the third network device, the first network device sends the first indication information to the third network device. Further, optionally, in this case, the first indication information and the first information described above may be carried in a same message. When the second cell belongs to the fourth network device, the first network device sends the first indication information to the fourth network device. This implementation helps ensure signal quality after the terminal device is handed over from the first cell to the second cell, and prevents services of the terminal device from being affected.

When the second network device is a DU and the first network device is a CU, the third network device described above may be referred to as a first DU, and the first DU is a DU to which the first cell belongs. The fourth network device described above may be referred to as a second DU, and is a DU different from the first DU, and the second DU and the first DU are managed by a same CU.

To reduce energy consumption, an embodiment of this application provides a communication method. As shown in FIG. 4, the communication method includes step 401 to step 403. The method shown in FIG. 4 is executed by a second network device and a first network device, or the method shown in FIG. 4 may be executed by a chip in the second network device and the first network device. FIG. 4 is described by using the second network device and the first network device as an example. An execution body of the communication method is not limited in this embodiment of this application. The second network device and the first network device may be network devices correspondingly described in the communication system shown in FIG. 1. Details are as follows.

401: The first network device sends first indication information to the second network device, and correspondingly, the second network device receives the first indication information from the first network device, where the first indication information indicates a terminal device handover status corresponding to each of at least one cell.

In this embodiment of this application, one or more second network devices may be centrally managed by one first network device. Optionally, the first network device may be a CU, the second network device may be a DU, and the CU and the DU may be in a split architecture. The at least one cell is some or all of cells of the second network device. The handover status of the terminal device is specifically whether the terminal device can be handed over to a cell. A reason why the terminal device cannot be handed over to a cell may include but is not limited to a case in which cell handover of the terminal device causes significant impact on communication quality, or an important service that is being performed by the terminal device cannot be interrupted. A case in which the terminal device cannot be handed over to a cell is not limited in this embodiment of this application. The terminal device handover status corresponding to the cell may be used by the second network device to estimate and determine impact of cell switch-off on the terminal device. Optionally, the first indication information further includes a coverage area corresponding to each of the at least one cell. The coverage area of the cell may also be used by the second network device to determine impact of the cell switch-off on the terminal device. For example, after the cell is switched off, the second network device determines whether there may be no cell coverage in an area, or whether the terminal device cannot access the cell after moving to the area.

The first indication information may include but is not limited to one or more of the following information: information about a handover status, a cause value for a handover failure, and auxiliary information of coverage information.

The information about the handover status may include: different specific handover statuses, for example, all terminal devices can be handed over, or some terminal devices can be handed over, or no terminal device can be handed over, or handover proportion values, for example, 0%, 10%, and so on to 100%; or may be true or false; or may be information about another handover status. This is not limited herein.

The cause value for the handover failure may include a cause value related to performance of the terminal device or performance of a neighboring cell, for example, a terminal service cannot be met, or communication quality of the terminal device is poor, or a neighboring cell resource is insufficient or busy. This is not limited.

The auxiliary information of the coverage information may be a relative value of the coverage information, an absolute value of an area, a value related to power strength, or a status of a coverage area, for example, a small range, a medium range, or a large range, or may be the coverage information or information related to the coverage information. This is not limited herein.

When each terminal device in a cell can be handed over, the first indication information may not include a cause value that is for a handover failure and that corresponds to the cell.

In a possible implementation, the first network device may send the first indication information to the second network device after receiving a first request. Specifically, the second network device sends the first request to the first network device, and correspondingly, the first network device receives the first request sent by the second network device, where the first request is used to request to obtain the terminal device handover status corresponding to each of the at least one cell and/or the coverage area corresponding to each of the at least one cell. Optionally, the first request includes a cell identity of each of the at least one cell and identifiers of all terminal devices or interface identifiers of all terminal devices in each cell. Based on this implementation, the second network device can trigger, as soon as possible, to determine whether cell switch-off needs to be performed.

An occasion on which the first network device sends the first indication information may alternatively be irrelevant to the first request. For example, the first network device may periodically send the first indication information to the second network device, or the first network device may send the first indication information to the second network device at a preset time point. The occasion on which the first network device sends the first indication information to the second network device is not limited in this embodiment of this application.

Optionally, an occasion on which the second network device sends the first request to the first network device may be that the at least one cell meets a first condition, where the first condition includes one or more of the following: load is less than a first threshold; energy consumption is less than a second threshold; or current time is within a switch-off time range of the cell.

First conditions of all cells served by the second network device may be a same condition, that is, first conditions of all cells are the same. Alternatively, first conditions corresponding to different cells served by the second network device may not be necessarily the same, that is, first conditions are in one-to-one correspondence with cells, each cell corresponds to a first condition of the cell, and first conditions of two cells may be the same or different.

Further, optionally, the first condition may be configured by a network management system or the first network device. Specifically, the second network device receives second indication information from the network management system or the first network device, and correspondingly, the second network device receives the second indication information from the network management system or the first network device. The second indication information indicates the first condition, and the second indication information includes but is not limited to one or more of the cell identity, the first threshold, the second threshold, and start time and end time of the switch-off time range. The first threshold may be a relative load value or an absolute load value, the second threshold is an energy consumption value, and the energy consumption value may be a relative energy consumption value, an absolute energy consumption value, or energy efficiency. For energy consumption, refer to the descriptions in the embodiment corresponding to FIG. 3, and details are not described herein again. In addition, the first condition may alternatively be implemented by the second network device internally. This is not limited in this embodiment of this application.

402: The second network device determines a first cell from the at least one cell based on the first indication information.

403: The second network device switches off the first cell.

In this embodiment of this application, there may be one or more first cells. A specific implementation in which the second network device determines the first cell from the at least one cell based on the first indication information is: determining, based on the first indication information, that all terminal devices in the first cell can perform cell handover. It may be understood that, after it is determined that all the terminal devices in the first cell can be handed over, cell switch-off performed by the second network device does not cause significant impact on the terminal devices in the first cell. Based on the method in this embodiment of this application, switching off the first cell by the second network device reduces energy consumption and can avoid significant impact on the terminal device after the second network device switches off the cell.

In a possible implementation, the first indication information further includes the coverage area corresponding to each of the at least one cell, and a total coverage area corresponding to all cells in the at least one cell except the first cell includes a coverage area corresponding to the first cell. Specifically, the coverage area of the first cell determined by the second network device from the at least one cell is located in the total coverage area of other cells. The other cells are other cells related to the first cell, for example, a neighboring cell of the first cell. The first cell and the other cells may be served by a same second network device, or may be served by different second network devices. In this case, switching off the first cell does not affect the coverage area corresponding to the first cell. If a coverage area of a cell is not located in a total coverage area of other cells, the coverage area of the cell may not be fully covered by the other cells after the cell is switched off. If the terminal device enters this area, the terminal device may fail to access the cell. Based on this implementation, switching off the cell by the second network device reduces energy consumption and avoids cell coverage holes.

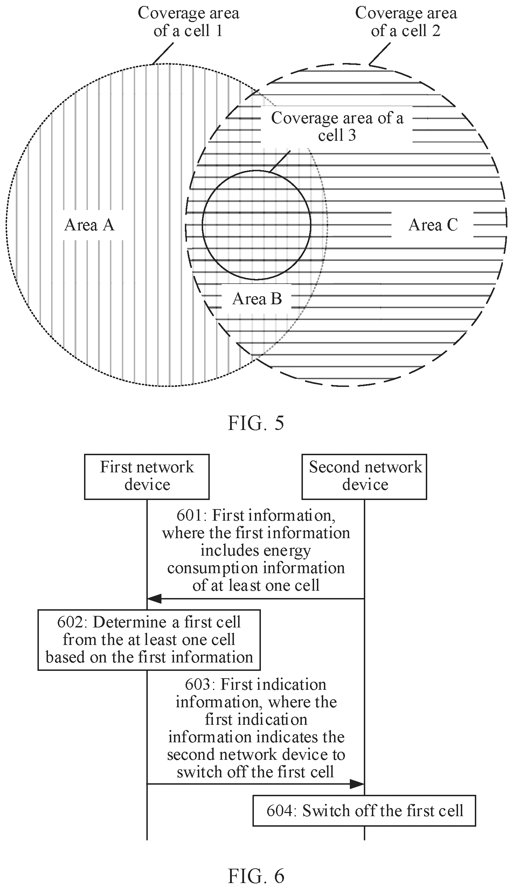

For example, as shown in FIG. 5, the second network device serves three cells: a cell 1, a cell 2, and a cell 3. A coverage area of the cell 1 includes an area A and an area B, a coverage area of the cell 2 includes an area C and the area B, and a coverage area of the cell 3 is within the area B. The coverage area of the cell 3 is located in a total coverage area (the area A+the area B+the area C) of the cell 1 and the cell 2. Therefore, after the cell 3 is switched off, the coverage area of the cell 3 is still covered by the cell 1 and the cell 2, and no coverage hole occurs. The coverage area of the cell 1 is not located in a total coverage area (the area B+the area C) of the cell 2 and the cell 3. Therefore, after the cell 1 is switched off, the area A is not covered by any cell, resulting a coverage hole.

In a possible implementation, the second network device further needs to determine the first cell from the at least one cell based on the first condition, that is, the first cell needs to meet the first condition. The first condition includes one or more of the following: the load is less than the first threshold; the energy consumption is less than the second threshold; or the current time is within the switch-off time range of the cell. For the descriptions of the first condition, refer to the descriptions of step 401. Details are not described again in this embodiment of this application. Based on this implementation, switching off the first cell with low load and/or low energy consumption within the switch-off time range (for example, in the early morning with few users) helps reduce energy consumption and can avoid impact on a large number of terminal devices.

In a possible implementation, before the second network device switches off the first cell, the second network device sends a second request to the first network device, and correspondingly, the first network device receives the second request from the second network device, where the second request indicates to request to hand over the terminal device in the first cell. After the first network device receives the second request, the first network device initiates cell handover of the terminal device. Optionally, after all terminal devices in the first cell complete cell handover, for example, after the first network device releases context information of all the terminal devices in the first cell, the first network device sends response information for the second request to the second network device, where the response information indicates, to the second network device, that all the terminal devices in the first cell have completed cell handover, and the first cell can be switched off. Optionally, the second request includes but is not limited to the following information: an identity of the first cell, a handover request indication, or a handover request cause value. If there is no terminal device in the first cell, the second network device may not need to send the second request. The handover request cause value may be network energy saving, cell switch-off, or a cause value related to another energy saving technology, for example, cell discontinuous transmission or cell discontinuous reception.

In a possible implementation, after the second network device switches off the first cell, the method further includes: The second network device sends third indication information to the first network device, and correspondingly, the first network device receives the third indication information from the second network device, where the third indication information indicates that the first cell is switched off. The third indication information may indicate that the first cell is in a sleep state and no longer provides a service for the terminal device. Optionally, after receiving the third indication information, the first network device may send coverage adjustment auxiliary information to another second network device, where the coverage adjustment auxiliary information includes an affected cell or synchronization signal block SSB information, to help the another second network device adjust a cell coverage area of the second network device.

Content of the third indication information may include at least one of the following: a cell identity of the first cell, an indication indicating that the first cell does not provide a service for a user, an indication indicating that the first cell is in a sleep mode of different levels such as a power-off state, or a cause value for switch-off of the first cell, where the cause value may be network energy saving or another cause value related to energy saving.

Optionally, after the first network device determines that all cells served by a second network device connected to a gNB-CU-UP are switched off, that is, all the cells served by the second network device connected to the gNB-CU-UP enter a sleep state and no user plane scheduling is performed through the gNB-CU-UP, the first network device may switch off the gNB-CU-UP corresponding to the second network device.

To reduce energy consumption, an embodiment of this application provides a communication method. As shown in FIG. 6, the communication method includes step 601 to step 604, and step 604 is optional. The method shown in FIG. 6 is executed by a second network device and a first network device, or the method shown in FIG. 6 may be executed by a chip in the second network device and the first network device. FIG. 6 is described by using the second network device and the first network device as an example. An execution body of the communication method is not limited in this embodiment of this application. The second network device and the first network device may be network devices correspondingly described in the communication system shown in FIG. 1. Details are as follows.

601: The second network device sends first information to the first network device, and correspondingly, the first network device receives the first information from the second network device, where the first information includes energy consumption information of at least one cell.

In this embodiment of this application, one or more second network devices may be centrally managed by one first network device. Optionally, the first network device may be a CU, the second network device may be a DU, and the CU and the DU may be in a split architecture. The at least one cell in the first information is some or all of cells served by the second network device. Optionally, the energy consumption information may include but is not limited to one or more of the following: energy consumption of the second network device (the DU) (node-level energy consumption), a cell identity, cell-level energy consumption, a terminal device identifier, terminal device-level energy consumption, a DRB identity, DRB-level energy consumption, a slice identifier, slice-level energy consumption, or energy consumption information of another level, for example, PDU session-level energy consumption or QoS flow-level energy consumption. This is not limited herein. For descriptions of the energy consumption information, refer to the descriptions in the embodiment corresponding to FIG. 3. The descriptions in this embodiment of this application are the same as those in the embodiment corresponding to FIG. 3, and details are not described herein again. Optionally, after receiving the first information, the first network device may further send the energy consumption information of the at least one cell to a core network device and/or a network management system, where the energy consumption information may be used for data analysis of the core network and/or data analysis of the network management system.

In a possible implementation, before the second network device sends the first information to the first network device, the method further includes: The first network device sends a first request to the second network device, and correspondingly, the second network device receives the first request from the first network device, where the first request is used to request the energy consumption information of the at least one cell. Optionally, the first request includes but is not limited to one or more of the following: a cell identity, an indication of requesting the energy consumption information, and a cause value for requesting to report the energy consumption information. The cause value may specifically be network energy saving, energy efficiency as a service, another cause value related to energy consumption or energy efficiency, or the like. Based on this implementation, the first network device can actively trigger a decision on whether the second network device needs to switch off the cell.

An occasion on which the second network device sends the first information may alternatively be irrelevant to the first request. For example, the second network device may periodically send the first information to the first network device, or send the first information to the first network device at preset time, or the second network device may send the first information to the first network device when some conditions are met, where for example, the condition may be that energy consumption of a cell served by the second network device is less than an energy consumption threshold. An occasion on which the second network device sends the first information to the first network device is not limited in this embodiment of this application.

602: The first network device determines a first cell from the at least one cell based on the first information.

In this embodiment of this application, there may be one or more first cells. The first network device determines, based on the first information or other information such as resource status information, the first cell with low energy consumption from the at least one cell. Optionally, the energy consumption of the first cell is less than a preset threshold, where the preset threshold may be a relative energy consumption value, an absolute energy consumption value, or energy efficiency. The low energy consumption of the first cell indicates that there are few terminal devices or there is no terminal device in the first cell currently. Switching off the first cell with the low energy consumption helps reduce energy consumption, and can avoid impact on a large number of terminal devices.

603: The first network device sends first indication information to the second network device, and correspondingly, the second network device receives the first indication information from the first network device, where the first indication information indicates the second network device to switch off the first cell.

In this embodiment of this application, the first indication information indicates that the at least one first cell can be switched off. Optionally, the second network device may directly switch off, based on the first indication information, all first cells indicated by the first indication information without making a decision. Alternatively, in addition to the first indication information, the second network device may further decide, based on a situation of the second network device or other parameter information of the first cell, for example, a coverage area of the first cell, whether to switch off the at least one first cell indicated by the first indication information. The second network device may determine to switch off some or all of the at least one first cell indicated by the first indication information, or the second network device may determine not to switch off the first cell.

604: The second network device switches off the first cell.

In a possible implementation, before the second network device switches off the first cell, the second network device sends a second request to the first network device, and correspondingly, the first network device receives the second request from the second network device, where the second request indicates to request to hand over the terminal device in the first cell. After the first network device receives the second request, the first network device initiates cell handover of the terminal device. Optionally, after all terminal devices in the first cell complete cell handover, for example, after the first network device releases context information of all the terminal devices in the first cell, the first network device sends response information for the second request to the second network device, where the response information indicates, to the second network device, that all the terminal devices in the first cell have completed cell handover, and the first cell can be switched off. Optionally, the second request includes but is not limited to one or more of the following information: an identity of the first cell, a handover request indication, or a handover request cause value. If there is no terminal device in the first cell, the second network device may not need to send the second request.

In a possible implementation, after the second network device switches off the first cell, the method further includes: The second network device sends second indication information to the first network device, and correspondingly, the first network device receives the second indication information from the second network device, where the second indication information indicates that the first cell is switched off. The second indication information may indicate that the first cell is in a sleep state and no longer provides a service for the terminal device. Optionally, after receiving the second indication information, the first network device may send coverage adjustment auxiliary information to another second network device, where the coverage adjustment auxiliary information includes an affected cell or SSB information, to help the another second network device adjust a cell coverage area of the second network device.

Content of the second indication information may include at least one of the following: a cell identity of the first cell, an indication indicating that the first cell does not provide a service for a user, an indication indicating that the first cell is in a sleep mode of different levels such as a power-off state, or a cause value for switch-off of the first cell, where the cause value may be network energy saving or another cause value related to energy saving.

Optionally, after the first network device determines that all cells served by a second network device connected to a gNB-CU-UP are switched off, that is, all the cells served by the second network device connected to the gNB-CU-UP enter a sleep state and no user plane scheduling is performed through the gNB-CU-UP, the first network device may switch off the gNB-CU-UP corresponding to the second network device.

To implement functions in the methods provided in embodiments of this application, the first network device and the second network device each may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

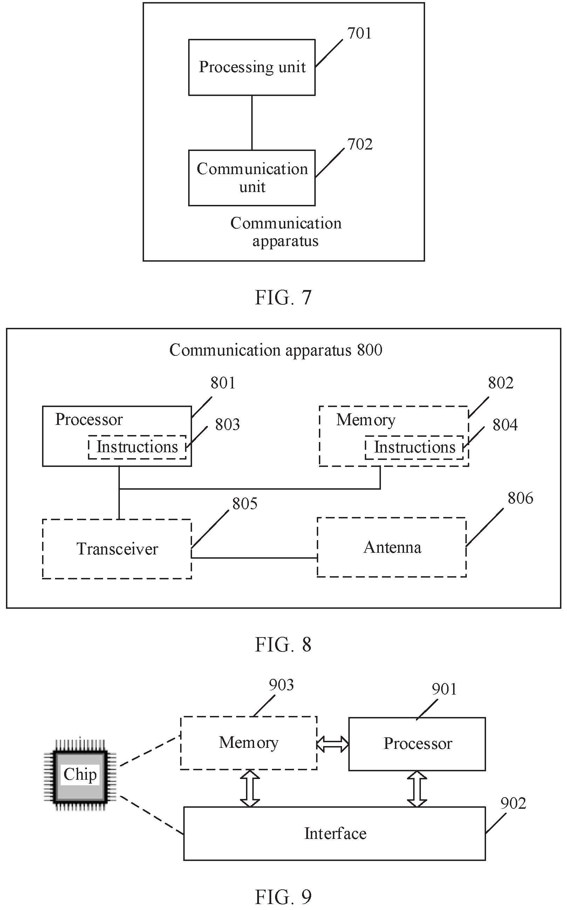

FIG. 7 is a diagram of a structure of a communication apparatus according to an embodiment of this application. The communication apparatus may be a first network device or a second network device, or an apparatus that can be used in conjunction with the first network device or the second network device. In a possible implementation, the communication apparatus may include modules or units that are in one-to-one correspondence with the methods/operations/steps/actions performed by the second network device or the first network device in the method embodiment shown in FIG. 3, FIG. 4, or FIG. 6. The unit may be implemented by using a hardware circuit, software, or a combination of the hardware circuit and the software.

The communication apparatus shown in FIG. 7 may include a processing unit 701 and a communication unit 702. The processing unit 701 is configured to perform data processing. A receiving unit and a sending unit are integrated into the communication unit 702. The communication unit 702 may also be referred to as a transceiver unit. Alternatively, the communication unit 702 may be split into a receiving unit and a sending unit.

The communication apparatus shown in FIG. 7 may be the second network device, or an apparatus that can be used in conjunction with the second network device. The communication apparatus may alternatively be a chip system.

When the communication apparatus is configured to perform some or all functions of the second network device in the method embodiment described in FIG. 3, the communication unit 702 is configured to send a first request to a first network device, where the first request is used to request the first network device to predict or determine whether at least one cell can be switched off. The communication unit 702 is further configured to receive first information from the first network device, where the first information indicates that at least one first cell can be switched off, and the first cell belongs to the at least one cell. The processing unit 701 is configured to determine, based on the first information, whether to switch off the first cell.

In a possible implementation, the first information further indicates a switch-off time range corresponding to the at least one first cell.

In a possible implementation, the first request further includes resource status information of the at least one cell and/or energy consumption information of the at least one cell.

In a possible implementation, the communication unit 702 is further configured to send second information to the first network device, where the second information includes resource status information of the at least one cell and/or energy consumption information of the at least one cell.

In a possible implementation, before the communication unit 702 sends the second information to the first network device, the communication unit 702 is further configured to receive a third request from the first network device, where the third request is used to request to report the energy consumption information of the cell.

In a possible implementation, before the switching off the first cell, the communication unit 702 is further configured to send a second request to the first network device, where the second request is used to request the first network device to hand over a terminal device in the first cell to another cell.

In a possible implementation, the communication unit 702 is further configured to receive first indication information from the first network device, where the first indication information indicates time and strength for enhancing coverage of a second cell, and/or the first indication information indicates time for the second cell to reserve a handover resource, the terminal device in the first cell is to be handed over to the second cell, and the second cell is a neighboring cell of the first cell.

In a possible implementation, after the switching off the first cell, the communication unit 702 is further configured to send second indication information to the first network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

When the communication apparatus is configured to perform some or all functions of the second network device in the method embodiment described in FIG. 4, the communication unit 702 receives first indication information sent by a first network device, where the first indication information indicates a terminal device handover status corresponding to each of at least one cell. The processing unit 701 is configured to determine a first cell from the at least one cell based on the first indication information. The processing unit 701 is further configured to switch off the first cell.

In a possible implementation, when determining the first cell from the at least one cell based on the first indication information, the processing unit 701 is specifically configured to determine, based on the first indication information, that all terminal devices in the first cell can perform cell handover.

In a possible implementation, the first indication information further includes a coverage area corresponding to each of the at least one cell, and a total coverage area corresponding to all cells in the at least one cell except the first cell includes a coverage area corresponding to the first cell.

In a possible implementation, before receiving the first indication information sent by the first network device, the communication unit 702 is further configured to send a first request to the first network device, where the first request is used to request to obtain the terminal device handover status corresponding to each of the at least one cell and/or the coverage area corresponding to each of the at least one cell.

In a possible implementation, the communication unit 702 is further configured to receive second indication information from the first network device, where the second indication information indicates a first condition.

In a possible implementation, before the switching off the first cell, the communication unit 702 is further configured to send a second request to the first network device, where the second request indicates to request to hand over the terminal device in the first cell.

In a possible implementation, the first cell meets the first condition, and the first condition includes one or more of the following: load is less than a first threshold; energy consumption is less than a second threshold; or current time is within a switch-off time range of the cell.

In a possible implementation, the communication unit 702 is further configured to send third indication information to the first network device, where the third indication information indicates that the first cell is switched off.

In a possible implementation, the third indication information further includes one or more of the following: a cell identity of the first cell, an indication indicating that the first cell does not provide a service for a user, a sleep mode level of the first cell, or a cause value for switch-off of the first cell.

When the communication apparatus is configured to perform some or all functions of the second network device in the method embodiment described in FIG. 6, the communication unit 702 is configured to send first information to a first network device, where the first information includes energy consumption information of at least one cell. The communication unit 702 is further configured to receive first indication information from the first network device, where the first indication information indicates the second network device to switch off a first cell. The processing unit 701 is configured to switch off the first cell.

In a possible implementation, the energy consumption information includes one or more of the following: node energy consumption, cell energy consumption, terminal energy consumption, data radio bearer DRB energy consumption, or slice energy consumption.

In a possible implementation, before sending the first information to the first network device, the communication unit 702 is further configured to receive a first request from the first network device, where the first request is used to request the energy consumption information of the at least one cell.

In a possible implementation, after the switching off the first cell, the communication unit 702 is further configured to send second indication information to the first network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

The communication apparatus shown in FIG. 7 may be the first network device, or an apparatus that can be used in conjunction with the first network device. The communication apparatus may alternatively be a chip system.

When the communication apparatus is configured to perform some or all functions of the first network device in the method embodiment described in FIG. 3, the communication unit 702 is configured to receive a first request from a second network device, where the first request is used to request to predict or determine whether at least one cell can be switched off. The processing unit 701 is configured to perform state prediction on the at least one cell, to obtain first information, where the first information indicates that the at least one first cell can be switched off. The communication unit 702 is further configured to send the first information to the second network device.

In a possible implementation, the first information further indicates a switch-off time range corresponding to the at least one first cell.

In a possible implementation, when performing prediction on the at least one cell, to obtain the first information, the processing unit 701 is specifically configured to perform prediction on the at least one cell based on second information, to obtain the first information, where the second information includes one or more of the following: resource status information of the cell, energy consumption information of the cell, channel quality information of a terminal device in the cell, resource status information of a neighboring cell, or mobility information of the terminal device.

In a possible implementation, the first request further includes the resource status information of the at least one cell and/or the energy consumption information of the at least one cell.

In a possible implementation, the communication unit 702 is further configured to receive second information sent by the second network device, where the second information includes the resource status information of the at least one cell and/or the energy consumption information of the at least one cell.

In a possible implementation, before the communication unit 702 receives the second information sent by the second network device, the communication unit 702 is further configured to send a third request to the second network device, where the third request is used to request to report the energy consumption information of the cell.

In a possible implementation, the communication unit 702 is further configured to receive a second request sent by the second network device, where the second request is used to request to hand over a terminal device in the first cell.

In a possible implementation, the communication unit 702 is further configured to send first indication information to the second network device, where the first indication information indicates time and strength for enhancing coverage of a second cell, and/or the indication information indicates time for the second cell to reserve a handover resource.

In a possible implementation, the communication unit 702 is further configured to receive second indication information from the second network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

When the communication apparatus is configured to perform some or all functions of the first network device in the method embodiment described in FIG. 4, the communication unit 702 is configured to send first indication information to a second network device, where the first indication information indicates a terminal device handover status corresponding to each of at least one cell.

In a possible implementation, the first indication information further includes a coverage area corresponding to each of the at least one cell.

In a possible implementation, the communication unit 702 is further configured to receive a first request from the second network device, where the first request is used to request to obtain the terminal device handover status corresponding to each of the at least one cell and/or the coverage area corresponding to each of the at least one cell.

In a possible implementation, the communication unit 702 is further configured to send second indication information to the second network device, where the second indication information indicates a first condition, and the first condition includes one or more of the following: cell load is less than a first threshold; cell energy consumption is less than a second threshold; or current time is within a switch-off time range of the cell.

In a possible implementation, the communication unit 702 is further configured to receive a second request from the second network device, where the second request indicates to request to hand over a terminal device in a first cell.

In a possible implementation, the communication unit 702 is further configured to receive third indication information from the second network device, where the third indication information indicates that the first cell is switched off.

In a possible implementation, the third indication information further includes one or more of the following: a cell identity of the first cell, an indication indicating that the first cell does not provide a service for a user, a sleep mode level of the first cell, or a cause value for switch-off of the first cell.

When the communication apparatus is configured to perform some or all functions of the first network device in the method embodiment described in FIG. 6, the communication unit 702 is configured to receive first information from a second network device, where the first information includes energy consumption information of at least one cell. The processing unit 701 is configured to determine a first cell from the at least one cell based on the first information. The communication unit 702 is further configured to send first indication information to the second network device, where the first indication information indicates the second network device to switch off the first cell.

In a possible implementation, the energy consumption information includes one or more of the following: node energy consumption, cell energy consumption, terminal energy consumption, data radio bearer DRB energy consumption, or slice energy consumption.

In a possible implementation, the communication unit 702 is further configured to send a first request to the second network device, where the first request is used to request the energy consumption information of the at least one cell.

In a possible implementation, the communication unit 702 is further configured to receive second indication information from the second network device, where the second indication information indicates that the first cell is switched off.

In a possible implementation, the second indication information further includes one or more of the following: a cell identity of the first cell, an indication indicating that the first cell does not provide a service for a user, a sleep mode level of the first cell, or a cause value for switch-off of the first cell.

In a possible implementation, the communication unit 702 is further configured to send the energy consumption information of the at least one cell to a core network device.

FIG. 8 is a diagram of a structure of another communication apparatus. The communication apparatus 800 may be the second network device in the foregoing method embodiments, or may be a chip, a chip system, a processor, or the like that supports the second network device in implementing the foregoing methods. The communication apparatus may be configured to implement the methods described in the foregoing method embodiments. For details, refer to the descriptions in the foregoing method embodiments.

Alternatively, the communication apparatus 800 may be the first network device in the foregoing method embodiments, or may be a chip, a chip system, a processor, or the like that supports the first network device in implementing the foregoing methods. The communication apparatus may be configured to implement the methods described in the foregoing method embodiments. For details, refer to the descriptions in the foregoing method embodiments.

The communication apparatus 800 may include one or more processors 801. The processor 801 may be a general-purpose processor, a dedicated processor, or the like, for example, may be a baseband processor or a central processing unit. The baseband processor may be configured to process a communication protocol and communication data. The central processing unit may be configured to control a communication apparatus (for example, a base station, a baseband chip, a terminal, a terminal chip, the second network device, or the first network device), execute a software program, and process data of the software program.

Optionally, the communication apparatus 800 may include one or more memories 802. The memory may store instructions 804, and the instructions may be run on the processor 801, to cause the communication apparatus 800 to perform the methods described in the foregoing method embodiments. Optionally, the memory 802 may further store data. The processor 801 and the memory 802 may be disposed separately, or may be integrated together.

Optionally, the communication apparatus 800 may further include a transceiver 805 and an antenna 806. The transceiver 805 may be referred to as a transceiver unit, a transceiver machine, a transceiver circuit, or the like, and is configured to implement a transceiver function. The transceiver 805 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

When the communication apparatus 800 is the second network device, the processor 801 is configured to perform a data processing operation of the second network device in the foregoing method embodiments. The transceiver 805 is configured to perform data sending and receiving operations of the second network device in the foregoing method embodiments.

Alternatively, when the communication apparatus 800 is the first network device, the processor 801 is configured to perform a data processing operation of the first network device in the foregoing method embodiments. The transceiver 805 is configured to perform data receiving and sending operations of the first network device in the foregoing method embodiments.

In another possible design, the processor 801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 801 may store instructions 803. When the instructions 803 are run on the processor 801, the communication apparatus 800 may be caused to perform the method described in the foregoing method embodiments. The instructions 803 may be fixed in the processor 801. In this case, the processor 801 may be implemented by hardware.

In still another possible design, the communication apparatus 800 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like.

The communication apparatus described in the foregoing embodiment may be the second network device or the first network device. However, a scope of the communication apparatus described in embodiments of this application is not limited thereto, and a structure of the communication apparatus may not be limited by FIG. 8. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (mobile station modem, MSM);
(4) a module that can be embedded in another device;
(5) a receiver, a terminal, an intelligent terminal, a cellular phone, a wireless device, a handheld device, a mobile unit, a vehicle-mounted device, a cloud device, or an artificial intelligence device; or
(6) others.

For a case in which the communication apparatus may be a chip or a chip system, refer to a diagram of a structure of a chip shown in FIG. 9. The chip shown in FIG. 9 includes a processor 901 and an interface 902. Optionally, the chip may further include a memory 903. There may be one or more processors 901, and there may be a plurality of interfaces 902.

In a design, when the chip is configured to implement a function of the second network device in embodiments of this application,
the interface 902 is configured to input or output a signal, and
the processor 901 is configured to perform a data processing operation of the second network device in the foregoing method embodiments.

In another design, when the chip is configured to implement a function of the first network device in embodiments of this application,
the interface 902 is configured to input or output a signal, and
the processor 901 is configured to perform a data processing operation of the first network device in the foregoing method embodiments.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the foregoing embodiments, the description of each embodiment has respective focuses. For a part that is not described in detail in an embodiment, refer to related descriptions in other embodiments.

## Claims

1. A communication method, wherein the method comprises:
sending a first request to a first network device, wherein the first request is used to request the first network device to predict or determine whether at least one cell can be switched off;
receiving first information from the first network device, wherein the first information indicates that at least one first cell can be switched off, and the first cell belongs to the at least one cell; and
determining, based on the first information, whether to switch off the first cell.

2. The method according to claim 1, wherein the first information further indicates a switch-off time range corresponding to the at least one first cell.

3. The method according to claim 2, wherein the first request further comprises resource status information of the at least one cell and/or energy consumption information of the at least one cell.

4. The method according to claim 2, wherein the method further comprises:
sending second information to the first network device, wherein the second information comprises resource status information of the at least one cell and/or energy consumption information of the at least one cell.

5. The method according to claim 4, wherein before the sending the second information to the first network device, the method further comprises:
receiving a third request from the first network device, wherein the third request is used to request to report the energy consumption information of the cell.

6. The method according to any one of claims 1 to 5, wherein before the switching off the first cell, the method further comprises:
sending a second request to the first network device, wherein the second request is used to request the first network device to hand over a terminal device in the first cell to another cell.

7. The method according to claims 1 to 6, wherein the method further comprises:
receiving first indication information from the first network device, wherein the first indication information indicates time and strength for enhancing coverage of a second cell, and/or the first indication information indicates time for the second cell to reserve a handover resource, the terminal device in the first cell is to be handed over to the second cell, and the second cell is a neighboring cell of the first cell.

8. The method according to any one of claims 1 to 7, wherein after the switching off the first cell, the method further comprises:
sending second indication information to the first network device, wherein the second indication information indicates that the first cell is switched off.

9. The method according to claim 8, wherein the second indication information further comprises one or more of the following: a cell identity of the first cell, an indication indicating that the first cell does not provide a service for a user, a sleep mode level of the first cell, or a cause value for switch-off of the first cell.

10. A communication method, wherein the method comprises:
receiving a first request from a second network device, wherein the first request is used to request to predict or determine whether at least one cell can be switched off;
performing state prediction on the at least one cell; and
sending first information to the second network device, wherein the first information indicates that at least one first cell can be switched off, and the first cell belongs to the at least one cell.

11. The method according to claim 10, wherein the first information further indicates a switch-off time range corresponding to the at least one first cell.

12. The method according to claim 10 or 11, wherein the performing prediction on the at least one cell, to obtain the first information comprises:
performing prediction on the at least one cell based on second information, to obtain the first information, wherein the second information comprises one or more of the following: resource status information of the cell, energy consumption information of the cell, channel quality information of a terminal device in the cell, resource status information of a neighboring cell, or mobility information of the terminal device.

13. The method according to claim 12, wherein the first request further comprises the resource status information of the at least one cell and/or the energy consumption information of the at least one cell.

14. The method according to claim 12, wherein the method further comprises:
receiving the second information sent by the second network device, wherein the second information comprises the resource status information of the at least one cell and/or the energy consumption information of the at least one cell.

15. The method according to claim 14, wherein before the receiving the second information sent by the second network device, the method further comprises:
sending a third request to the second network device, wherein the third request is used to request to report the energy consumption information of the cell.

16. The method according to any one of claims 10 to 15, wherein the method further comprises:
receiving a second request sent by the second network device, wherein the second request is used to request to hand over a terminal device in the first cell.

17. The method according to claim 16, wherein the method further comprises:
sending first indication information to the second network device, wherein the first indication information indicates time and strength for enhancing coverage of a second cell, and/or the first indication information indicates time for the second cell to reserve a handover resource.

18. The method according to any one of claims 10 to 17, wherein after the sending the first information to the second network device, the method further comprises:
receiving second indication information from the second network device, wherein the second indication information indicates that the first cell is switched off.

19. The method according to claim 18, wherein the second indication information further comprises one or more of the following: a cell identity of the first cell, an indication indicating that the first cell does not provide a service for a user, a sleep mode level of the first cell, or a cause value for switch-off of the first cell.

20. A communication apparatus, wherein the communication apparatus comprises a module or a unit configured to perform the method according to any one of claims 1 to 9, or the communication apparatus comprises a module or a unit configured to perform the method according to any one of claims 10 to 19.

21. A communication apparatus, comprising a processor coupled to a memory, wherein the processor is configured to execute a computer program or instructions stored in the memory, to implement the method according to any one of claims 1 to 9 or the method according to any one of claims 10 to 19.

22. The apparatus according to claim 21, wherein the apparatus further comprises the memory and/or a transceiver, and the transceiver is configured to send and receive data and/or signaling.

23. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor performs the method according to any one of claims 1 to 9 by using a logic circuit or by executing instructions, or the processor performs the method according to any one of claims 10 to 19 by using the logic circuit or by executing the instructions.

24. A computer-readable storage medium, wherein the storage medium stores a computer program or instructions, and when the computer program or the instructions are executed by a communication apparatus, the method according to any one of claims 1 to 9 is performed, or the method according to any one of claims 10 to 19 is performed.
